# EUROPÄISCHE PATENTSCHRIFT

(11) **EP 0 143 287 B1**
(45) Veröffentlichungstag und Bekanntmachung des Hinweises auf die Patenterteilung: **20.01.1993**
(21) Anmeldenummer: 84112081.9
(22) Anmeldetag: 09.10.1984
(51) Int. Cl.: G01S 13/78

(54) **Bordgerät für ein Zweiweg-Entfernungsmesssystem**
Airborne equipment for a distance-measuring system
Equipement aéroporté pour système de mesure de distance

(30) Priorität: 29.10.1983 DE 3339388
(43) Veröffentlichungstag der Anmeldung: 05.06.1985
(73) Patentinhaber: ALCATEL N.V., NL-1077 XX Amsterdam (NL); Alcatel SEL Aktiengesellschaft, D-70435 Stuttgart (DE)
(72) Erfinder: Behrens, Hermann-Josef, D-7250 Leonberg (DE)
(74) Vertreter: Gähr, Hans-Dieter, Dipl.-Ing. (FH)

(56) Entgegenhaltungen:
- US-A- 3 934 251
- US-A- 3 940 764
- US-A- 4 028 698
- E. KRAMAR "Funksysteme für Ortung und Navigation " 1973, Verlag Berliner Union GmbH Seiten 148-157

## Beschreibung

Die Erfindung geht aus von einem Bordgerät für ein Zweiweg-Entfernungsmeßsystem, wie es im Oberbegriff des Anspruches 1 angegeben ist.

Ein solches Bordgerät ist aus dem Buch "Funksysteme für Ortung und Navigation" von E. Kramar, Verlag Berliner Union GmbH, Stuttgart, 1973, Seiten 148 bis 155 bekannt. Die wesentliche Funktion derartiger Bord geräte besteht in der Trennung der eigenen, d.h. für das abfragende Bordgerät bestimmten Antworten von den übrigen von der ortsfesten Antwortstation abgegebenen Signalen, und in der Ermittlung der Laufzeit der Doppelimpulse und die Umwandlung in eine Entfernungsanzeige.

Für die Entfernungsmeßgenauigkeit ist es von großer Bedeutung, daß der Empfangszeitpunkt der Antwortsignale genau gemessen wird. Dieses ist weitgehend bei einer Auswertung des jeweils ersten Impulses der empfangenen Doppelimpuls-Antwortsignale zur Entfernungsmessung sichergestellt, weil dadurch Reflexionsfehler wesentlich reduziert werden können. Bekannte Schaltungen, mit denen dieses realisiert wird, sind relativ aufwendig.

Beispielsweise ist in der US-A-3,940,764 eine Schaltungsanordnung zur Erkennung zweier aufeinanderfolgender Pulse anhand ihres Abstandes beschrieben, in der mehrere parallele Schieberegister zur Speicherung von Zählerständen eines zyklisch zählenden Meßzählers verwendet werden. Abhängig vom Auftreten zweier Eingangsimpulse in vorgegebenem codiertem Abstand werden die dem ersten der aufeinanderfolgenden Pulse zuzuordnenden Schieberegisterstände ausgelesen und als Feinkorrekturwerte für einen aus der Anzahl der Meßzählerzyklen gewonnenen, zur Berechnung der Entfernung benutzten Zeitmeßwert verwendet.

Die Aufgabe der Erfindung besteht darin, ein Bordgerät der genannten Art zu schaffen, das trotz einfachem Schaltungsaufbau zuverlässig arbeitet.

Diese Aufgabe wird durch die im Anspruch 1 angegebenen Merkmale gelöst. Die Unteransprüche zeigen vorteilhafte Ausgestaltungen des Erfindungsgegenstandes auf.

Die durch die Erfindung erzielten Vorteile bestehen insbesondere darin, daß gegenüber bisher bekannten Ausführungen ein geringerer Aufwand an Bauelementen erforderlich ist, daß das Geräterechnersystem gering belastet wird und daß eine schnelle Verarbeitung der Antwortsignale und eine präzise Messung gewährleistet sind.

Anhand eines Ausführungsbeispiels wird die Erfindung in Verbindung mit der Zeichnung nachfolgend näher erläutert.

Das in der Zeichnung dargestellte Blockschaltbild zeigt den die Antwortsignal-Auswertung umfassenden Teil eines Bordgerätes.

Eine von der Empfangsschaltung kommende Leitung L₂ ist mit dem Eingang eines Dekoders DK verbunden. Dieser dient in bekannter Weise zum Dekodieren der Antwort-Doppelimpulse. Er ist über eine Stelleinrichtung SE auf unterschiedliche Doppelimpulsabstände einstellbar. Der Dekoder DK ist ausgangsseitig mit dem Eingang eines Korrelators KR verbunden. Der Ausgang des Korrelators KR ist auf den Reset-Eingang eines Flip-Flops FF geschaltet, dessen Ausgang mit einem Eingang eines UND-Gliedes UG verbunden ist. Der zweite Eingang des UND-Gliedes UG ist über eine Leitung l₃ direkt an die Leitung l₂ angeschlossen. Der Ausgang des UND-Gliedes UG ist mit den Eingang eines Ringzählers RZ und einem Meßwertübernahmeeingang eines Stapelregisters SR verbunden. Das Stapelregister SR hat vorzugsweise vier Speicherstellen A bis D, die durch den Ringzähler RZ zyklisch zur Übernahme von Zählerstandswerten eines Meßzähzählers MZ adressiert werden.

Der Meßzähler MZ kann gemäß der deutschen Patentanmeldung P 32 40 891.9 ausgebildet sein. Er dient zum Erfassen der Zeitintervalle von mehreren auf ein Ereignis A bezogenen Ereignissen B. Er besteht aus einem Hauptzähler und einem Hilfszähler, die beide Asynchronzähler sind. Beim Einschalten des Meßzählers beginnt der Hauptzähler mit einer Zählfrequenz zu zählen. Durch ein das A-Ereignis kennzeichnendes Signal wird der Hauptzähler auf Null gestellt. Tritt danach ein erstes, ein B-Ereignis kennzeichnendes Signal auf, so wird der Hauptzähler angehalten. Gleichzeitig wird der als Ringzähler ausgebildete Hilfszähler gestartet. Die Kapazität des Hilfszählers ist so gewählt, daß der Hauptzähler genügend Zeit zum Setzen seiner Stufen hat und das dem Zeitintervall entsprechende Zählergebnis in ein Register übertragen werden kann. Über den Hilfszähler erfolgt eine Korrektur des Zählstandes des Hauptzählers um einen der Haltezeit entsprechenden Wert. Der anschließend wieder freigegebene Hauptzähler hat damit zu diesem Zeitpunkt einen Zählstand, wie wenn er kontinuierlich weitergezählt hätte. Treten anschließend ein zweites bzw. weitere, ein B-Ereignis kennzeichnende Signale auf, so wiederholt sich der vorbeschriebene Ablauf entsprechend.

Auch der Meßzähler MZ gemäß der Zeichnung wird im Takt einer Zählfrequenz fz ständig fortgeschaltet Der Zähler MZ hat einen Reset-Eingang R, der zusammen mit dem Setz-Eingang des Flip-Flops FF und einem Synchronisationseingang SY des Korrelators KR an eine gemeinsame Leitung l₁ angeschlossen ist. Der Ausgang des Flip-Flops FF ist über eine Leitung l₄ mit einem zugehörigen, nicht dargestellten Rechner verbunden. Über Leitungen l₅ und l₆ sind der Adressausgang des Ringzählers RZ und der Ausgang des Stapelregisters SR ebenfalls mit dem Rechner verbunden. Über Leitungen l₇ hat der Rechner bei einer entsprechenden Adressierung Zugang zu den Speicherstellen A bis D des Stapelregisters SR.

Die Funktionsweise der vorbeschriebenen Anordnung ist folgende:
Zur Abfrage einer Antwortstation wird das Bordgerät zuvor auf den Betriebsmodus der Station, d.h. auf die Stationsfrequenz und den stationsspezifischen Impulsabstand der Doppelimpulse eingestellt. Letzterer wird über eine Stelleinheit SE in den Dekoder DK eingegeben.

Mit dem Aussenden eines Abfragesignals in Form eines Doppelimpulses tritt auf der Leitung l₁ ein mit dem ersten Impuls synchroner Startimpuls auf. Dieser startet den Korrelator KR synchron zum ersten Impuls, setzt das Flip-Flop FF und stellt den Meßzähler MZ auf Null zurück, der mit dem Zähltakt fz sofort weiterzählt.

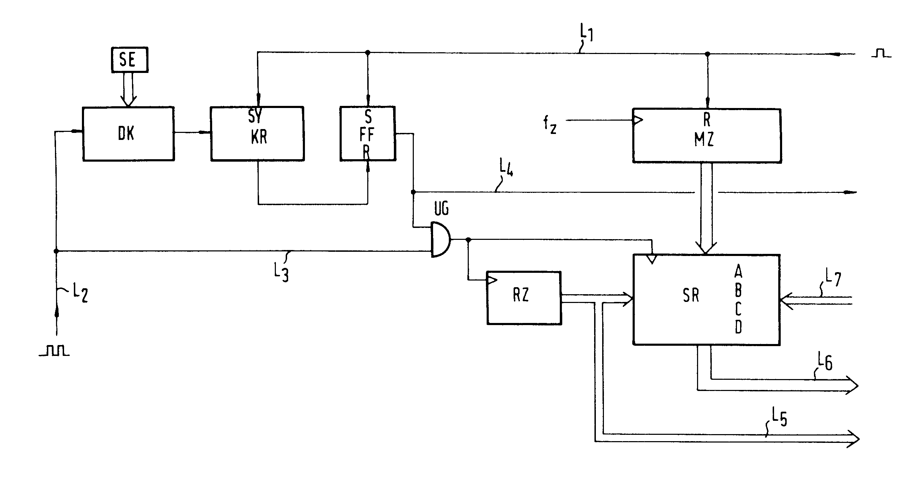

Mit dem Setzen des Flip-Flops FF wird das UND-Glied über den einen Eingang vorbereitet. Im Empfangszustand des Bordgerätes werden sämtliche empfangenen Signale in Form von Triggerimpulsen über die Leitung l₂ dem Dekoder DK und gleichzeitig über die Leitung l₃ dem zweiten Eingang des UND-Gliedes UG zugeführt. Dieses schaltet bei jedem Impuls durch, was zur Folge hat, daß der Ringzähler RZ jedesmal um eine Stelle weiterschaltet. Dadurch werden in zyklischer Folge die Speicherstellen A, B, C und D im Stapelregister SR adressiert, in die durch die gleichzeitige Ansteuerung des Übernahmeeinganges des Stapelregisters SR der jeweilige Zählstand des Meßzählers MZ übernommen wird, wie zu Figur 2 beschrieben.

Während das UND-Glied UG bei jedem Impuls durchschaltet und einen Einspeicherungsvorgang auslöst, werden die eintreffenden Doppelimpulse durch die aus dem Dekoder DK und dem Korrelator KR bestehende Erkennungsschaltung in an sich bekannter Weise auf den Impulsabstand und die synchrone Lage zum Abfragesignal überprüft. Sind beide Bedingungen mehrfach erfüllt, so wird im Korrelator KR ein Schwellwert überschritten. Dieses löst die Rückstellung des Flip-Flops FF in den Ausgangszustand aus. Dadurch ist die Vorbereitung des UND-Gliedes UG aufgehoben, so daß der Ringzähler RZ und das Stapelregister SR in der letzten Einstellung verharren. Dieser Zustand wird dem Rechner durch die Potentialänderung auf der Leitung l₄ mitgeteilt.

Durch den Dekoder DK wird in üblicher Weise der Impulsabstand dadurch überprüft, daß der erste eines jeden Doppelimpulses um den vorgegebenen Soll-Abstand verzögert und mit dem zweiten Impuls verglichen wird. Wenn beide deckungsgleich sind, ist dieses das Kriterium, daß es sich um einen Doppelimpuls mit dem gesuchten Abstand handelt. Dieses Testprinzip hat zur Folge, daß das Dekoderergebnis erst beim zweiten Impuls vorliegt. Es ist jedoch aus den genannten Gründen notwendig, die Entfernungsmessung auf den ersten der beiden Impulse zu beziehen.

Mit Hilfe der vorbeschriebenen Anordnung ist der Zeitpunkt des ersten Impulses, wie nachstehend erläutert, reproduzierbar.

Nachdem durch den Korrelator KR Synchronantworten zu den Abfragen ermittelt worden sind, wird in der vorbeschriebenen Weise die Übernahme von weiteren Zählerstandswerten in das Stapelregister SR unterbrochen. Dieses tritt jeweils ein, nachdem der zweite Impuls eines eigenen Antwortsignals die Übernahme eines Zählerstandswertes in eine der Speicherstellen A bis D des Stapelregisters SR bewirkt hat. Dabei bleibt die entsprechende Speicherstellenadressierung im Ringzähler RZ erhalten. Diese wird nach der Signalisierung über die Leitung l₄ vom Rechner über die Leitungen l₅ abgefragt. Die gleiche Adresse wird als Leseadresse über Leitungen l₇ zum Auffinden der Speicherstelle angelegt, in der der Zählerstandswert abgelegt ist, der zum zweiten Impuls des letzten ausgewerteten eigenen Antwortsignals gehört. Der Zählerstandswert wird über die Leitungen l₆ ausgelesen und zwischengespeichert. Durch anschließendes Dekrementieren der Leseadresse ist ein Zugriff zu den drei vorangegangenen, sich noch im Stapelregister SR befindlichen Zählerstandswerten möglich. Unter diesen muß der zum ersten Impuls des letzten eigenen Antwortsignals gehörende Zählerstandswert sein. Durch einige Substraktionen und Vergleiche unter Berücksichtigung des dekodierten Impulsabstandes ist der zum ersten Impuls gehörende Zählerstandswert schnell und exakt zu ermitteln. Dieser Wert wird der nachfolgenden Entfernungsberechnung zugrunde gelegt.

Die zeitlichen Bedingungen sind so gewählt, daß der Inhalt des Stapelregisters SR zum Beginn des nächsten Abfragezyklus gelesen ist.

Die Ausführung des Stapelregisters SR mit vier Speicherstellen ist nur eine Möglichkeit. Theoretisch reichen zwei Speicherstellen aus, um die Zählermeßwerte der beiden zu einem Antwortsignal gehörenden Impulse aufzunehmen. Aus Sicherheitsgründen ist es jedoch ratsam, mehr als zwei Speicherstellen vorzusehen, da die Möglichkeit des Empfangs von fremden Impulsen zwischen den zu einem Antwortsignal gehörenden Impulsen nicht ausgeschlossen werden kann. Bei einem zweistelligen Register würde das den Verlust des Zählermeßwertes zum ersten Impuls zur Folge haben. Damit wäre eine Entfernungsbestimmung nicht mehr möglich.

## Patentansprüche

1. Bordgerät für ein Zweiweg-Entfernungsmeßsystem, welches Abfragesignale abstrahlt und Antwortsignale einer ortsfesten Anwortstation empfängt, wobei die Abfrage- und Antwortsignale aus Doppelimpulsen mit vorgegebenem zeitlichem Abstand bestehen, und welches die Entfernung zur Antwortstation aus der Zeitdifferenz zwischen der Abstrahlung eines Abfragesignals und dem Empfang eines Antwortsignals unter Berücksichtigung geräteinterner Laufzeiten ermittelt, und hierzu einen Meßzähler (MZ), eine aus einem Dekoder (DK) und einem Korrelator (KR) bestehende Erkennungsschaltung und eine Auswerteschaltung besitzt, und in dem der Meßzähler synchron mit dem ersten Impuls jedes Abfragesignals von Null aus zu zählen beginnt und die Erkennungsschaltung durch vom Bordgerät abgestrahlte eigene Abfragesignale ausgelöste Antwortsignale aus einer von der Antwortstation abgegebenen Vielzahl von Doppelimpulsen selektiert und bei Empfang eines derartigen Antwortsignals die Ausgabe eines Zählergebnisses an die Auswerteschaltung veranlaßt,
**dadurch gekennzeichnet,** daß der Meßzähler (MZ) ausgangsseitig mit einem Stapelregister (SR) mit mindestens zwei Speicherstellen verbunden ist, daß jeder nach einer Abfrage empfangene Impuls eine Übernahme des aktuellen Meßzählerstandes in das Stapelregister (SR) bewirkt, solange bis die Erkennungsschaltung dies mit dem Auftreten des zweiten Impulses des durch das Abfragesignal ausgelösten Antwortsignals unterbindet und daß die Auswerteschaltung, ausgehend von dem mit dem zweiten Impuls des Antwortsignals in das Stapelregister (SR) übernommenen und gespeicherten Zählerstand unter Berücksichtigung des vorgegebenen zeitlichen Abstandes der Impulse der durch eigene Abfragesignale ausgelösten Antwortsignale einen dem ersten Impuls des Antwortsignals entsprechenden Zählerstandswert berechnet und den mit diesem übereinstimmenden, im Stapelregister (SR) gespeicherten Wert aufsucht und ausliest.

2. Bordgerät nach Anspruch 1, dadurch gekennzeichnet, daß ein Ringzähler (RZ) vorgesehen ist, der eine den Speicherstellen des Stapelregisters (SR) entsprechende Zählkapazität hat, daß der Ringzähler (RZ) nacheinander die Speicherstellen für die Übernahme der Meßzählerstände adressiert und daß die jeweils im Ringzähler (RZ) eingestellte Schreibadresse gleich der Leseadresse ist, unter der der als letzter übernommene Meßzählerstand im Stapelregister (SR) auffindbar ist.

## Claims

1. An airborne set for a two-way distance-ranging system which transmits interrogation signals and receives reply signals from a fixed transponder, the interrogation and reply signals consisting of pairs of pulses spaced a predetermined time distance apart, and determines the distance to the transponder from the time difference between the transmission of an interrogation signal and the reception of a reply signal, allowing for built-in equipment delays, and, to do this, includes a measuring counter (MZ), a recognition circuit, and an evaluating circuit, the recognition circuit consisting of a decoder (DK) and a correlator (KR), the measuring counter beginning to count from zero synchronously with the first pulse of each interrogation signal, and the recognition circuit selecting reply signals initiated by interrogation signals transmitted by the airborne set from a plurality of pulse pairs transmitted by the transponder and, upon receipt of such a reply signal, causing a count to be output to the evaluating circuit, **characterized in** that the measuring counter (MZ) has its output connected to a stack register (SR) having at least two locations, that each pulse received after an interrogation causes the current count of the measuring counter to be transferred to the stack register (SR) until the recognition circuit stops this on the occurrence of the second pulse of the reply signal initiated by the interrogation signal, and that the evaluating circuit, starting from the count transferred into the stack register (SR) on the second pulse of the reply signal, calculates a count corresponding to the first pulse of the reply signal, taking into account the predetermined pulse spacing of the reply signals initiated by interrogation signals from the airborne set, seeks the corresponding value stored in the stack register (SR), and reads it out.

2. An airborne set as claimed in claim 1, characterized in that a ring counter (RZ) is provided whose capacity is equal to the number of locations of the stack register (SR), that the ring counter (RZ) successively addresses the locations into which the counts of the measuring counter are to be transferred, and that the respective write address set in the ring counter (RZ) is equal to the read address at which the last count transferred to the stack register (SR) can be found therein.

## Revendications

1. Equipement de bord pour un système de mesure de distance bidirectionnel, qui émet des signaux d'interrogation et reçoit des signaux de réponse d'une station de réponse fixe, équipement dans le cas duquel les signaux d'interrogation et de réponse sont constitués d'impulsions doubles présentant un écart dans le temps prescrit, et équipement qui détermine la distance à la station de réponse à partir de la différence de temps entre l'émission d'un signal d'interrogation et la réception d'un signal de réponse en tenant compte des durées de transmission à l'intérieur de l'appareil, et possède dans ce but un compteur de mesure (MZ), un circuit de reconnaissance constitué d'un décodeur (DK) et d'un corrélateur (KR), et un circuit de traitement, et équipement dans lequel le compteur de mesure commence à compter, à partir de zéro, en synchronisme avec la première impulsion de chaque signal d'interrogation et dans lequel le circuit de reconnaissance sélectionne des signaux de réponse, déclenchés par des signaux d'interrogation propres émis par l'équipement de bord, parmi une pluralité d'impulsions doubles émises par la station de réponse et, en cas de réception d'un signal de réponse de ce type, provoque l'envoi d'un résultat de comptage au circuit de traitement,
équipement de bord caractérisé par le fait que le compteur de mesure (MZ) est relié, du côté de la sortie, avec un registre à pile (SR) comportant au moins deux positions de mémoire, par le fait que chaque impulsion reçue après une interrogation opère un transfert de l'état de comptage de mesure actuel dans le registre à pile (SR), jusqu'à ce que le circuit de reconnaissance interrompe ce processus à l'arrivée de la seconde impulsion du signal de réponse déclenché par le signal d'interrogation, et par le fait qu'en partant de l'état de comptage transféré et mémorisé dans le registre à pile (SR) au moment de la seconde impulsion du signal de réponse et en tenant compte de l'écart prescrit dans le temps des impulsions des signaux de réponse déclenchés par des signaux d'interrogation propres, calcule une valeur de comptage du compteur correspondant à la première impulsion du signal de réponse et recherche et lit la valeur, mémorisée dans le registre à pile (SR), qui coïncide avec cette valeur de comptage du compteur qui vient d'être calculée.

2. Equipement de bord selon la revendication 1, caractérisé par le fait qu'il est prévu un compteur annulaire (RZ) qui a une capacité de comptage correspondant aux positions de mémoire du registre à pile (SR), par le fait que le compteur annulaire (RZ) utilise successivement les adresses des différentes positions de mémoire pour le transfert des états de comptage du compteur de mesure, et par le fait que l'adresse d'écriture inscrite dans le compteur annulaire (RZ) est identique à l'adresse de lecture à laquelle on peut trouver dans le registre à décalage (SR) l'état de comptage du compteur de mesure transmis en dernier.
